# EUROPEAN PATENT APPLICATION

(11) **EP 4 775 612 A1**
(43) Date of publication of application: **15.07.2026**
(21) Application number: 25151786.8
(22) Date of filing: 14.01.2025
(51) Int. Cl.: C08G 59/24, C08G 59/40, C08G 65/18, C09J 163/00

(54) **A LIGHT-CURABLE CATIONIC EPOXY COMPOSITION**

(71) Applicant: Henkel AG & Co. KGaA, 40589 Düsseldorf (DE)
(72) Inventor: Seo, Ys Yongseong, 08506 Seoul (KR); Choi, Kuhn Sukhoon, 08291 Seoul (KR); Choi, Kwangho, 21425 Incheon (KR); Kim, Chloe Yujeong, Siheung-si (KR); Yoo, Liz Jeongwon, Incheon (KR)

(57) **Abstract**

The present invention relates to a light-curable cationic epoxy composition comprising a) an aromatic oxetane compound, b) an oxetane compound containing OH-group, c) a cycloaliphatic epoxy compound, and d) a cationic initiator. Combination of an aromatic oxetane compound, oxetane containing OH-group and cycloaliphatic epoxy compound successfully overcomes the differences in surface characteristics and surface energy among substrates, securing consistent adhesion across multiple substrates.

## Description

### Technical field of the invention

The present invention relates to a light-curable cationic epoxy composition with strong adhesion strength on various substrates and curable under longer light wavelengths longer than 405 nm.

### Background of the invention

Adhesives used in electronic products and the semiconductor industry come into contact with various different type of materials such as engineering plastics, coated plastics, metals, coated metals, glass, and coated glass. All of these various materials necessitate a certain level of adhesion based on the surface characteristics. The differences in surface characteristics and surface energy among different materials are making it difficult to adhesives to provide consistent adhesion across multiple materials. To achieve reliable adhesion across different materials, a consistent level of bonding strength is essential. However, existing adhesive formulations often do not demonstrate uniform adhesion across different materials, frequently necessitating additional treatments such as plasma processing or primer application.

There are various epoxy and oxetane based adhesives on the market which cure at wavelengths above 450. Such adhesives have the advantage of achieving thicker cure depths due to the longer curing wavelength, and they can be designed as delayed-curing adhesives, allowing for curing in areas where light does not reach. These benefits have led to their recent use as structural adhesives, and moulding compounds in the semiconductor and electronics industries. However, compositions that are primarily based on light curable cycloaliphatic epoxies may face challenges in enhancing adhesion to various materials.

Therefore, there is a need to provide an adhesive what is taking into consideration the differences in different surface characteristics and surface energy in various materials while securing consistent strong adhesion.

### Summary of the invention

The present invention relates to a light-curable cationic epoxy composition comprising a) an aromatic oxetane compound, b) an oxetane compound containing OH-group, c) a cycloaliphatic epoxy compound, and d) a cationic initiator.

The present invention also relates to a cured light-curable cationic epoxy composition according to top the present invention, wherein the composition is cured with wavelengths from 405 nm to 700nm.

The present invention encompasses use of the light-curable cationic epoxy composition or cured composition according to the present invention in moulding on display materials.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term "*one component (1K) composition*" refers to a composition where, during storage of the composition, the composition components are all admixed together but the properties of the composition, including viscosity, remain consistent enough over the time of storage to permit successful utility of the composition at a later time.

"*Two-component (2K) compositions*" are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in order to accelerate the cross-linking reaction.

As used herein, room temperature is 23°C plus or minus 2°C. As used herein, "*ambient conditions*" means the temperature and pressure of the surroundings in which the composition is located or in which a coating layer or the substrate of said coating layer is located.

The oxetane and epoxide compounds herein undergo "*ring-opening polymerization*" by which is meant a polymerization in which a cyclic compound (*monomer*) is opened to form a linear polymer in the presence of an appropriate catalyst. The reaction system tends towards an equilibrium between the desired resulting high-molecular compounds, a mixture of cyclic compounds and / or linear oligomers, the attainment of which equilibrium largely depends on the nature and amount of the cyclic monomers, the catalyst used and on the reaction temperature. The use of solvents and / or emulsions in the polymerization is not recommended as their removal once the reaction is complete can be complex.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine, and phenyl.

As used herein, the term "*oxetane*" denotes a compound characterized by the presence of at least one cyclic ether group, namely one oxygen atom and three carbon atoms are forming a cyclic structure. The term is intended to encompass monooxetane compounds, polyoxetane compounds (having two or more oxetane groups) and oxetane terminated prepolymers. The term "*monooxetane compound*" is meant to denote oxetane compounds having one oxetane group. The term "*poly* oxetane *compound*" is meant to denote oxetane compounds having at least two oxetane groups. The term "*dioxetane compound*" is meant to denote oxetane compounds having two oxetane groups.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a light-curable cationic epoxy composition comprising a) an aromatic oxetane compound, b) an oxetane compound containing OH-group, c) a cycloaliphatic epoxy compound, and d) a cationic initiator.

Combination of an aromatic oxetane compound, oxetane compound containing OH-group and cycloaliphatic epoxy compound successfully overcomes the differences in surface characteristics and surface energy among substrates, securing consistent adhesion across multiple substrates. This combination of compounds enhances the performance of adhesives in the electronics industry, thereby increasing their range of applications.

Compositions according to the present invention can be cured at wavelengths above 405 snm and have a delayed cure at wavelengths above 405 nm. Compositions allow deep light penetration and thick layers can be cured. Delayed curing properties enable cure even in dark areas.

Compositions according to the present invention show high adhesion to glass, coated glass, engineering plastics, IC covers, and metals without surface pretreatment. Especially high adhesion is shown for copper and oxidized copper.

The light-curable cationic epoxy composition according to the present invention comprises an aromatic oxetane compound.

Preferably, the aromatic oxetane compound is selected from the group consisting of 4,4'-bis[(3-ethyl-3-oxetanyl)methoxy-methyl]biphenyl, 1,4-bis{[(3-ethyloxetane-3- yl)methoxy]methyl}benzene, bis[(3-ethyl-3-oxetanyl)methyl] isophtalate, and mixtures thereof, preferably the aromatic oxetane monomer is 4,4'-bis[(3-ethyl-3-oxetanyl)methoxy-methyl]biphenyl.

The above listed aromatic oxetane compounds enhance the adhesion of the composition, and especially adhesion to copper.

Suitable commercially available aromatic oxetane compound for use in the present invention include but is not limited to ETERNACOLL^{®} OXBP from UBE.

The aromatic oxetane compound may be present in the light-curable cationic epoxy composition according to the present invention in a quantity from 10 to 30% by weight of the total weight of the composition, preferably from 13 to 27% and more preferably from 15 to 25%, and even more preferably from 17 to 23%.

The above defined quantities are ideal, because too low quantities, less than 10%, may lead to poor adhesion properties, whereas too high quantities, more than 30%, may lead to too hard composition.

The light-curable cationic epoxy composition according to the present invention comprises an oxetane compound containing OH-group.

The oxetane compound containing OH-group makes the adhesive hydrophilic.

Preferably the oxetane compound containing OH-group is selected from the group consisting of 3-ethyl-3-hydroxymetyloxetane, (3-ethyl-3-(4hydroxybuthyloxymethyl) oxetane, and mixtures thereof, preferably the oxetane monomer containing OH-group is 3-ethyl-3-hydroxymetyloxetane.

Suitable commercially available oxetane compounds containing OH-group for use in the present invention include but are not limited to Aron Oxetane OXT-101 from Toagosei and ETERNACOLL^{®} EHO from UBE.

The oxetane compound containing OH-group may be present in the light-curable cationic epoxy composition according to the present invention in a quantity from 10 to 30% by weight of the total weight of the composition, preferably from 13 to 27% and more preferably from 15 to 25%, and even more preferably from 17 to 23%.

The above defined quantities are ideal, because too low quantities, less than 10%, may lead to poor adhesion properties, whereas too high quantities, more than 30%, may lead to brittle composition.

The light-curable cationic epoxy composition according to the present invention comprises a cycloaliphatic epoxy compound.

Preferably the cycloaliphatic epoxy compound is selected from the group consisting of cyclohexanedimethanol diglycidyl ether, bis(3,4-epoxycyclohexylmethyl) adipate, bis(3,4-epoxy-6-methylcyclohexylmethyl) adipate, bis(2,3-epoxycyclopentyl) ether, 3,4-epoxycyclohexylmethyl 3',4'-epoxycyclohexanecarboxylate, 1,4-cyclohexanedimethanol diglycidyl ether, diglycidyl 1,2-cyclohexanedicarboxylate, bis(2,3-epoxypropyl)cyclohexane-1,2-dicarboxylate, cycloaliphatic epoxy resins obtained by the hydrogenation of aromatic bisphenol A diglycidyl ether (BADGE) epoxy resins, and mixtures thereof, preferably the cycloaliphatic epoxy compound is 3,4-epoxycyclohexylmethyl 3',4'-epoxycyclohexanecarboxylate.

Suitable commercially available cycloaliphatic epoxy compound for use in the present invention include but is not limited to Celloxide 2021P from DAICEL.

The cycloaliphatic epoxy compound may be present in the light-curable cationic epoxy composition according to the present invention in a quantity from 25 to 55% by weight of the total weight of the composition, preferably from 30 to 50%, more preferably from 33 to 47% and even more preferably from 35 to 45%.

The above defined quantities are ideal, because too low quantities, less than 10%, may lead to poor adhesion properties, whereas too high quantities, more than 55%, may lead to too hard composition.

The light-curable cationic epoxy composition according to the present invention comprises a cationic initiator.

Preferably the cationic initiator is a salt represented by the formula A⁺B⁻ which produces cationic active species by irritation of light, and wherein the cation A⁺ is selected from the group consisting of aromatic iodonium ions, aromatic sulfonium ions and aromatic iron ions, and wherein the anion B⁻ is selected from the group consisting of SbF⁻₆, PF⁻₆, AsF⁻₆ and B(Aryl)⁻₄, B(C₆F₅)₄⁻, B(C₆F₄OCF₃)₄⁻ and B(C₆F₄CF₃)₄⁻, more preferably the cationic initiator is diaryliodonium fluorine antimonate.

The cationic initiator diaryliodonium fluorine antimonate is highly preferred because it enables extremely fast photopolymerisation.

Suitable commercially available cationic initiator for use in the present invention include but is not limited to PC-2506 from Polyset.

The cationic initiator may be present in the light-curable cationic epoxy composition according to the present invention in a quantity from 0.05 to 10% by weight of the total weight of the composition, preferably from 0.1 to 6%, more preferably from 0.5 to 5% and even more preferably from 0.5 to 4%.

The above defined quantities are ideal, because too low quantities, less than 0.05%, may lead to too slow curing, whereas too high quantities, more than 10%, may lead to over curing.

The light-curable cationic epoxy composition according to the present invention may further comprise an adhesion promoter.

Preferably the adhesion promoter is selected from the group consisting of 3-glycidoxypropyltrimethoxysilane, 3-aminopropyltrimethoxysilane, 3-methacryloxypropyltrimethoxysilane, 3-ethyl-3-[[3-(triethoxysilyl)propoxy]methyl]oxetane, 3-methyl-3-[[3-(triethoxysilyl)propoxy]methyl]oxetane, 2-(3,4 epoxycyclohexyl) ethyltrimethoxysilane, and mixtures thereof, preferably the adhesion promoter is 3-glycidoxypropyltrimethoxysilane.

Suitable commercially available adhesion promoter for use in the present invention include but is not limited to Xiameter OFS-6040 from Dow chemical.

The adhesion promoter may be present in the light-curable cationic epoxy composition according to the present invention in a quantity from 1 to 20% by weight of the total weight of the composition, preferably from 3 to 18%, more preferably from 4 to 14% and even more preferably from 5 to 11%.

The above defined quantities are ideal, because too low quantities, less than 1%, may lead to no adhesion promotion, whereas too high quantities, more than 20%, may lead to interfering with over curing.

The light-curable cationic epoxy composition according to the present invention may further comprise a filler.

The filler may be used to adjust the viscosity of the composition.

Preferably the filler is selected from the group consisting of calcium carbonate, calcium oxide, calcium hydroxide (lime powder), fumed silica, amorphous silica, precipitated and/or pyrogenic silica, hydrophobic fumed silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, polytetrafluoroethylene, bismaleimide, polyethylene, polypropylene, silicone, polystyrene, polyether ether ketone, polyphenylsulfone, and mixtures thereof, preferably the filler is hydrophobic fumed silica.

Hydrophobic fumed silica is preferred because of its efficient viscosity control.

Suitable commercially available filler for use in the present invention include but is not limited to Aerosil RY-300 from Evonik.

The filler may be present in the light-curable cationic epoxy composition according to the present invention in a quantity from 1 to 20% by weight of the total weight of the composition, preferably from 3 to 17%, more preferably from 5 to 15% and even more preferably from 6 to 14%.

The above defined quantities are ideal, because too low quantities, less than 1%, may be inefficient quantity to modify viscosity, whereas too high quantities, more than 20%, may lead to too high viscosity.

The present invention also relates to a cured light-curable cationic epoxy composition according to the present invention, wherein the composition is cured with wavelengths from 405 nm to 700nm, preferably from 450 nm to 700nm.

UV/Vis exposure may be made by from 405 to 700 nm LED lamp or metal halide lamp at an intensity from 50 mW/cm² to 700 mW/cm² for a duration of from 10 seconds to 300 seconds.

The present invention encompasses use of the light-curable cationic epoxy composition or cured composition according to the present invention in moulding on display materials.

### Examples

Formulations for example 1 and comparative examples 1 and 2 were prepared in accordance with the compositional information provided in Table 1 below.

**Table 1**

| Component | Example 1 (wt.%) | Comparative example 1 (wt.%) | Comparative example 2 (wt.%) |
|---|---|---|---|
| OXT-101 oxetane monomer from Toagosei | 20 | | |
| OXBP oxetane from UBE | 20 | 20 | |
| Celloxide 2021P cycloaliphatic diepoxide from Daicel Corporation | 40 | 60 | 80 |
| PC-2506 - cationic initiator from Polyset | 2 | 2 | 2 |
| Xiameter OFS-6040 - adhesion promoter from Dow chemical | 8 | 8 | 8 |
| RY 300 - filler from Evonik | 10 | 10 | 10 |
| TOTAL | 100 | 100 | 100 |

The adhesion strength of the examples was tested according to die shear test ASTM F1269-13.

Copper plates were used as a substrate and the surface of the substrate was wiped by tissue with isopropyl alcohol.

The adhesives were applied to copper substrate and UV cured by LED 450nm wavelength, 50 ~ 700mW, 10 ~ 300 sec. After UV cured, thermal cured by 1 day (at room temperature).

The results are provided in table 2 below.

**Table 2**

| | Example 1 | Comparative example 1 | Comparative example 2 |
|---|---|---|---|
| Adhesion strength (Mpa) | 1 | 0.5 | 0.3 |

In view of the foregoing description and examples, it will be apparent to those skilled in the art that equivalent modifications thereof can be made without departing from the scope of the claims.

## Claims

1. A light-curable cationic epoxy composition comprising
a) an aromatic oxetane compound;
b) an oxetane compound containing OH-group;
c) a cycloaliphatic epoxy compound; and
d) a cationic initiator.

2. The light-curable cationic epoxy composition according to claim 1, wherein the aromatic oxetane compound is selected from the group consisting of 4,4'-bis[(3-ethyl-3-oxetanyl)methoxy-methyl]biphenyl, 1,4-bis{[(3-ethyloxetane-3-yl)methoxy]methyl}benzene, bis[(3-ethyl-3-oxetanyl)methyl] isophtalate, and mixtures thereof, preferably the aromatic oxetane monomer is 4,4'-bis[(3-ethyl-3-oxetanyl)methoxy-methyl]biphenyl.

3. The light-curable cationic epoxy composition according to claim 1 or 2, wherein the aromatic oxetane compound is present in a quantity from 10 to 30% by weight of the total weight of the composition, preferably from 13 to 27% and more preferably from 15 to 25%, and even more preferably from 17 to 23%.

4. The light-curable cationic epoxy composition according to any one of the claims 1 to 3, wherein the oxetane compound containing OH-group is selected from the group consisting of 3-ethyl-3-hydroxymetyloxetane, (3-ethyl-3-(4hydroxybuthyloxymethyl) oxetane, and mixtures thereof, preferably the oxetane monomer containing OH-group is 3-ethyl-3-hydroxymetyloxetane.

5. The light-curable cationic epoxy composition according to any one of the claims 1 to 4, wherein the oxetane compound containing OH-group is present in a quantity from 10 to 30% by weight of the total weight of the composition, preferably from 13 to 27% and more preferably from 15 to 25%, and even more preferably from 17 to 23%.

6. The light-curable cationic epoxy composition according to any one of the claims 1 to 5, wherein the cycloaliphatic epoxy compound is selected from the group consisting of cyclohexanedimethanol diglycidyl ether, bis(3,4-epoxycyclohexylmethyl) adipate, bis(3,4-epoxy-6-methylcyclohexylmethyl) adipate, bis(2,3-epoxycyclopentyl) ether, 3,4-epoxycyclohexylmethyl 3',4'-epoxycyclohexanecarboxylate, 1,4-cyclohexanedimethanol diglycidyl ether, diglycidyl 1,2-cyclohexanedicarboxylate, bis(2,3-epoxypropyl)cyclohexane-1,2-dicarboxylate, cycloaliphatic epoxy resins obtained by the hydrogenation of aromatic bisphenol A diglycidyl ether (BADGE) epoxy resins, and mixtures thereof, preferably the cycloaliphatic epoxy compound is 3,4-epoxycyclohexylmethyl 3',4'-epoxycyclohexanecarboxylate.

7. The light-curable cationic epoxy composition according to any one of the claims 1 to 6, wherein the cycloaliphatic epoxy compound is present in a quantity from 25 to 55% by weight of the total weight of the composition, preferably from 30 to 50%, more preferably from 33 to 47% and even more preferably from 35 to 45%.

8. The light-curable cationic epoxy composition according to any one of the claims 1 to 7, wherein the cationic initiator is a salt represented by the formula A⁺B⁻ which produces cationic active species by irritation of light, and wherein
the cation A⁺ is selected from the group consisting of aromatic iodonium ions, aromatic sulfonium ions and aromatic iron ions, and wherein
the anion B⁻ is selected from the group consisting of SbF⁻₆, PF⁻₆, AsF⁻₆ and B(Aryl)⁻₄, B(CeF₅)₄, B(C₆F₄OCF₃)₄⁻ and B(C₆F₄CF₃)₄⁻,
preferably the cationic initiator is diaryliodonium fluorine antimonate.

9. The light-curable cationic epoxy composition according to any one of the claims 1 to 8, wherein the cationic initiator is present in a quantity from 0.05 to 10% by weight of the total weight of the composition, preferably from 0.1 to 6%, more preferably from 0.5 to 5% and even more preferably from 0.5 to 4%.

10. The light-curable cationic epoxy composition according to any one of the claims 1 to 9 further comprise an adhesion promoter, preferably selected from the group consisting of 3-glycidoxypropyltrimethoxysilane, 3-aminopropyltrimethoxysilane, 3-methacryloxypropyltrimethoxysilane, 3-ethyl-3-[[3-(triethoxysilyl)propoxy]methyl]oxetane, 3-methyl-3-[[3-(triethoxysilyl)propoxy]methyl]oxetane, 2-(3,4 epoxycyclohexyl) ethyltrimethoxysilane, and mixtures thereof, preferably the adhesion promoter is 3-glycidoxypropyltrimethoxysilane.

11. The light-curable cationic epoxy composition according to any one of the claims 1 to 10, wherein the adhesion promoter is present in a quantity from 1 to 20% by weight of the total weight of the composition, preferably from 3 to 18%, more preferably from 4 to 14% and even more preferably from 5 to 11%.

12. The light-curable cationic epoxy composition according to any one of the claims 1 to 11 further comprise a filler, preferably selected from the group consisting of calcium carbonate, calcium oxide, calcium hydroxide (lime powder), fumed silica, amorphous silica, precipitated and/or pyrogenic silica, hydrophobic fumed silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, polytetrafluoroethylene, bismaleimide, polyethylene, polypropylene, silicone, polystyrene, polyether ether ketone, polyphenylsulfone, and mixtures thereof, preferably the filler is hydrophobic fumed silica.

13. The light-curable cationic epoxy composition according to any one of the claims 1 to 12, wherein the filler is present in a quantity from 1 to 20% by weight of the total weight of the composition, preferably from 3 to 17%, more preferably from 5 to 15% and even more preferably from 6 to 14%.

14. A cured light-curable cationic epoxy composition according to any one of the claims 1 to 13, wherein the composition is cured with wavelengths from 405 nm to 700nm, preferably from 450 nm to 700 nm.

15. Use of the light-curable cationic epoxy composition according to any one of the claims 1 to 13 or cured composition according to claim 14 in moulding on display materials.
